# EUROPEAN PATENT APPLICATION

(11) **EP 2 597 912 A1**
(43) Date of publication of application: **29.05.2013**
(21) Application number: 10854916.3
(22) Date of filing: 12.10.2010
(51) Int. Cl.: H04W 48/16

(54) **FILE DOWNLOADING METHOD AND DEVICE BASED ON WIRELESS FIDELITY WIFI**

(30) Priority: 21.07.2010 CN 201010238735
(71) Applicant: ZTE Corporation, Shenzhen, Guangdong 518057 (CN)
(72) Inventor: ZHOU, Kai, Guangdong 518057 (CN); QIAO, Qi, Guangdong 518057 (CN)
(74) Representative: Pronovem
(86) International application number: PCT/CN2010/077683
(87) International publication number: WO 2012/009886

(57) **Abstract**

The present invention discloses a method and an apparatus of downloading files based on wireless fidelity WIFI. The method comprises: setting a download task, searching an access point for accessing the network; and judging whether the found access point is a WIFI access point; if it is a WIFI access point, then downloading a file indicated by the download task. With the present invention, when a user departs the coverage area of current WIFI access point or the current WIFI access point fails, the system can automatically store the unfinished download task and continuously search a WIFI access point and continue to download the file indicated by the stored download task according to a preset condition after accessing a WIFI access point, thus overcoming the problem that there is limit in using WIFI to download files in the related art, simplifying user operation, and improving user experience.

## Description

### Field of the Invention

The present invention relates to the Wireless Fidelity (WIFI) transmission technology field, and in particular to a method and an apparatus for downloading files based on WIFI.

### Background of the Invention

With the continuous development and upgrade of mobile technologies, especially the establishment of 3G network, using mobile phones to access the network is one of the functions most frequently used by people.

With the continuous enhancement of mobile phone network, the performance of mobile phones is also improving rapidly. People are not satisfied with only using mobile phones to log onto brief WAP websites, but lots of people begin to use large-screen mobile phones to log onto WWW websites. Apparently, the high-performance handheld mobile phones become small portable computers, which not only can browse rich and colorful pages and also can download the resources on the websites into the mobile phones.

However, currently most of the mobile phones use the mobile communication network. Regardless of the 2G network or the 3G network, most of mobile communication networks charge according to traffic. This causes a problem that when we use mobile phones to access network and especially when we download relatively big files, it will cause large amount of network traffic with expensive costs. Also, when using the current mobile communication network to get online, speed is a bottleneck which cannot be ignored. Even though the downlink speed of the current 3G network is generally above 1Mbit/s, it still cannot meet the requirements sometimes, and the 2G network is even worse.

Currently, an emerging technology gradually becomes mature and becomes popular rapidly. It is the WIFI, the predecessor of which is the Wireless Ethernet Compatibility Alliance, a short range wireless transmission technology capable of supporting the radio signals of accessing the Internet in the range of several hundreds of feet. With the support of wireless routers, users can enjoy a network speed up to 100M. The biggest feature of the WIFI is that it is totally free in most cases. Therefore, the WIFI network is provided in many restaurants and office buildings. When people are there, they can use high speed and free network resources. The wireless features of WIFI make it become popular rapidly on mobile phones.

But WIFI is also limited by area. People cannot enjoy its rapidness and convenience anywhere or anytime. For example, when a user is using WIFI to download a file, if the user departs the area covered by this WIFI access point or this WIFI access points fails, then the user must re-select the file to be downloaded and re-search a new WIFI access point manually, thus increasing operation complexity and bringing limit on using WIFI to download files.

### Summary of the Invention

The present invention mainly provides a method and an apparatus for downloading files based on WIFI, so as to at least solve the problem that there is limit when using WIFI to download files in the related art.

A method for downloading files based on WIFI is provided according to one aspect of the present invention, which method comprises: setting a download task; searching for an access point for accessing a network; judging whether the found access point is a WIFI access point; and if the found access point is the WIFI access point, then downloading a file indicated by the download task.

Furthermore, setting the download task comprises: selecting the file to be downloaded; and storing the download task corresponding to the selected file.

Furthermore, setting the download task further comprises: setting a parameter for the download task, wherein the parameter comprises at least one of: a download address of the file, a storage time of the download task, and a way of processing the download task when the storage time is expired.

Furthermore, searching the access point for accessing the network comprises: if currently the WIFI access point is not connected and there exists an unfinished download task, performing a step of searching for an access point for accessing the network every preset time interval,.

Furthermore, downloading the file indicated by the download task comprises: when a preset download time arrives, downloading the file indicated by the download task.

Furthermore, after judging whether the found access point is the WIFI access point, the method further comprises: if the found access point is not the WIFI access point and a storage time of the download task is expired, then using a mobile communication network to download the file indicated by the download task, or deleting the download task.

An apparatus for downloading files based on WIFI is provided according to another aspect of the present invention, which apparatus comprises: a searching unit, configured to search for an access point for accessing a network; and a download management unit, configured to set a download task before searching for the access point for accessing the network, judge whether the found access point is a WIFI access point, and download a file indicated by the download task when the found access point is the WIFI access point.

Furthermore, the download management unit comprises: a download task storing module, configured to store the download task corresponding to the selected file; and a download task executing module, configured to download the file indicated by the download task when the found access point is the WIFI access point.

Furthermore, the download management unit further comprises: a setting module, configured to set a parameter for the download task, wherein the parameter comprises at least one of: a download address of the file, a storage time of the download task, and a way of processing the download task when the storage time is expired.

Furthermore, the download management unit is further configured to use a mobile communication network to download the file indicated by the download task or delete the download task, when the found access point is not the WIFI access point and a storage time of the download file is expired.

By virtue of the present invention, when a user departs the coverage area of the current WIFI access point or the current WIFI access point fails, the system can automatically store the unfinished download task and continuously search for a WIFI access point. After accessing the WIFI access point, the system continues to download the file indicated by the stored download task according to a preset condition. Thus, this solution overcomes the problem that there is limit in using the WIFI to download files in the related art, simplifies user operation, and improves user experience.

### Brief Description of the Drawings

The drawings illustrated herein provide a further understanding of the present invention and form a part of the present application. The exemplary embodiments and the description thereof are used to explain the present invention without unduly limiting the scope of the present invention. In the drawings:
Fig. 1 is a flow chart of a method for downloading files based on WIFI according to the embodiments of the present invention;
Fig. 2 is a schematic diagram of the structure of an apparatus for downloading files based on WIFI according to the embodiments of the present invention;
Fig. 3 is a diagram of the structures of a download management unit and a searching unit according to the embodiments of the present invention;
Fig. 4 is a schematic diagram of the operation interface of the download management unit according to the embodiments of the present invention;
Fig. 5 is a preferred flow chart of parameter setting and an ordinary download method according to the embodiments of the present invention; and
Fig. 6 is a preferred flow chart of an intelligent download method according to the embodiments of the present invention.

### Detailed Description of Embodiments

The present invention is described hereinafter in detail with reference to the drawings and in conjunction with embodiments. It needs to be noted that the embodiments of the present application and the features of the embodiments can be combined with each other if there is no conflict.

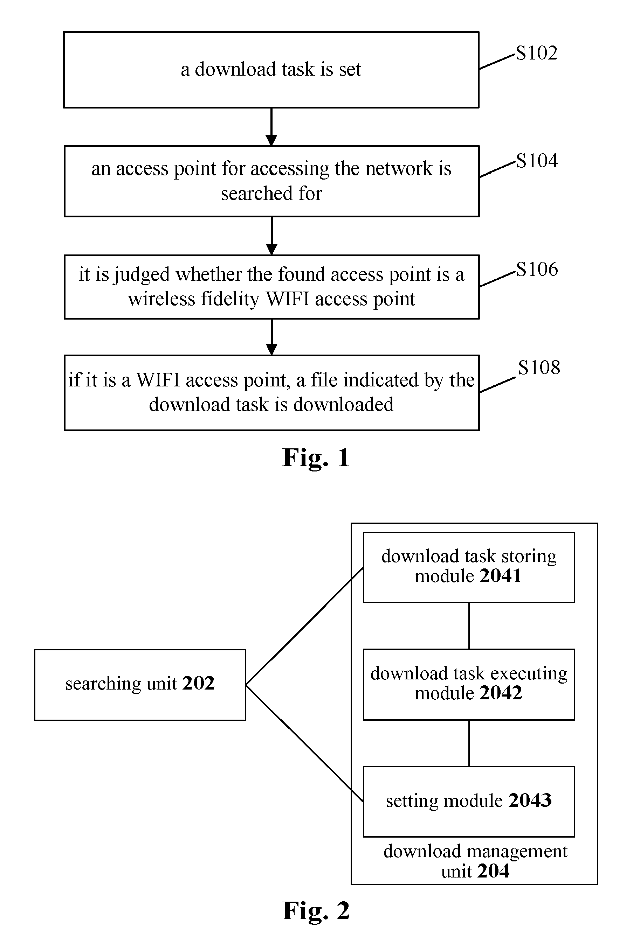

Fig. 1 is a flow chart of a method for downloading files based on WIFI according to the embodiments of the present invention, comprising the following steps.
S102: a download task is set.
S104: an access point for accessing the network is searched for.
S106: it is judged whether the found access point is a WIFI access point.
S108: If it is a WIFI access point, a file indicated by the download task is downloaded.

In the related art, when a user is using the WIFI to download a file, if the user departs the area covered by this WIFI access point or this WIFI access points fails, the user must re-select the file to be downloaded and re-search for a new WIFI access point manually, thus increasing operation complexity and bringing limit on using WIFI to download files. However, in the above preferred embodiments of the present invention, when a user departs the coverage area of the current WIFI access point or the current WIFI access point fails, the system can automatically store the unfinished download task and continuously search for a WIFI access point. After accessing a WIFI access point, the system continues to download the file indicated by the stored download task according to a preset condition, Thus, this solution overcomes the problem that there is limit in using the WIFI to download files in the related art, simplifies user operation, and improves user experience.

Preferably, the step of setting a download task can comprises: selecting the file to be downloaded; and storing the download task corresponding to the selected file. By this solution, it can support resuming downloading of files from breakpoint, which improves the efficiency of the WIFI download and simplifies the user operation.

Preferably, the step of setting a download task can further comprise: setting a parameter for the download task, wherein the parameter comprises at least one of the followings: the download address of the file, the storage time of the download task, and the way of processing the download task when the storage time is expired. With the above parameters, the expired and unfinished download task can be managed, thus improving the management efficiency of the download task.

Preferably, the step of searching an access point for accessing the network can comprise: if currently the WIFI access point is not connected and there exists an unfinished download task, performing the step of searching for an access point for accessing the network every preset time interval. By this solution, the system only performs search for WIFI access point on a preset time point, thus saving system overhead. Preferably, it can save the electricity consumption of the mobile terminals.

Preferably, the step of downloading a file indicated by the download task can comprise: when the preset download time arrives, downloading a file indicated by the download task. By the solution, the flexibility of the download task management can be improved.

Preferably, after judging whether the found access point is a WIFI access point, the method for downloading filed based on WIFI can further comprise: if the found access point is not a WIFI access point and the storage time of the download task is expired, using the mobile communication network to download the file indicated by the download task or deleting the download task. With this preferred embodiment, the expired and unfinished download task can be managed, thus improving the management efficiency of the download task.

Fig. 2 is a schematic diagram of the structure of an apparatus for downloading files based on WIFI according to the embodiments of the present invention, which apparatus comprises: a searching unit **202,** configured to search for an access point for accessing the network; and a download management unit **204,** configured to set a download task before searching for an access point for accessing the network, judge whether the found access point is a WIFI access point, and download a file indicated by the download task when the found access point is a WIFI access point.

As to the above preferred embodiments of the present invention, when a user departs the coverage area of the current WIFI access point or the current WIFI access point fails, the download management unit 204 can automatically store the unfinished download task and continuously search for a WIFI access point. After accessing a WIFI access point, the system can continue to download the file indicated by the download task according to a preset condition. Thus, this solution overcomes the problem that there is limit in using WIFI to download files in the related art, simplifies user operation, and improves user experience.

Preferably, the download management unit **204** can comprise: a download task storing module **2041,** configured to store the download task corresponding to the selected file; and a download task executing module **2042,** configured to download a file indicated by the download task when the found access point is a WIFI access point. By this solution, it can support resuming downloading of files from breakpoint, which improves the efficiency of WIFI download and simplifies user operation.

Preferably, the download management unit **204** can further comprise: a setting module **2043,** configured to set a parameter for the download task, wherein the parameter comprises at least one of the followings: the download address of the file, the storage time of the download task, and the way of processing the download task when the storage time is expired. With the above parameters, the expired and unfinished download task can be managed, thus improving the management efficiency of the download task.

Preferably, the download management unit **204** can be further configured to use the mobile communication network to download the file indicated by the download task or delete the download task, when the found access point is not a WIFI access point and the storage time of the download file is expired. With this preferred embodiment, the expired and unfinished download task can be managed, thus improving the management efficiency of the download task.

The function of the download management unit (also referred to as download manager) is described hereinafter. After a user selects a file to download, this download task will be added into the download management unit automatically, instead of downloading immediately. The download management unit stores some use parameters set by the user. These parameters decide the download procedure. The first parameter is whether the WIFI network is needed for the download. The second parameter is the waiting time of the download task. The user can designate the suspension time of the download task, such as one day, one week or permanently, etc. The third main parameter is the way of processing when the suspension is expired. The way of processing comprises using the mobile communication network to download, deleting this task, and alerting the user to re-select. These parameters can be set by the user before download and can be changed anytime. Thus, the user can continue to browse other contents after having selected the download contents, and the download management unit will run in the background, which will not affect any user experience.

The function of the the WIFI searching unit is described hereinafter. The searching unit uses the WIFI function on the mobile phone to search for an available WIFI network automatically. Once the download management unit suspends a download task, it will inform the WIFI searching unit to perform searching. The user can set the frequency of the search so as to save the electricity consumption of the mobile phone. For example, the search is performed every five minutes or every half an hour. After having found a WIFI wireless access point (that is, an available WIFI network is found), the WIFI searching unit informs the download management unit, and the download management unit starts all the suspended tasks to perform download operation, all of which run in the background.

When the download is finished, the download management unit will send a notification to the user, and the user can view and use the resources of his choice.

The download management unit and searching unit shown in Fig. 2 are described in detail hereinafter in conjunction with the drawings.

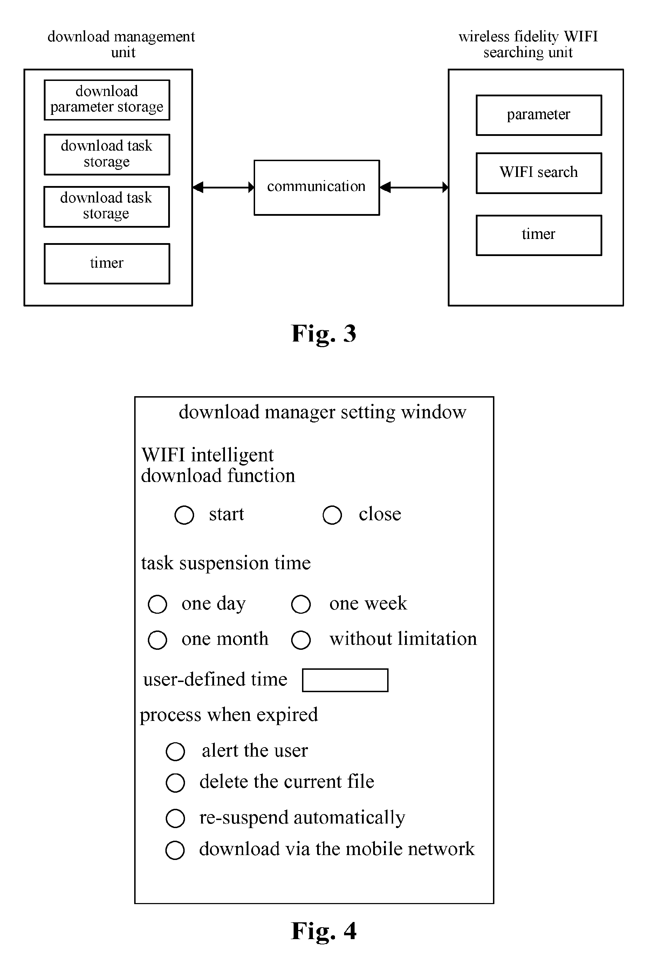

As shown in Fig. 3, the download management unit mainly comprises the following four parts.
1) A download parameter storing module: the parameters of the download management unit set by the user are stored in the download parameter storing module. The first parameter is very important and it is the WIFI intelligent download function. The present invention can operate only when this function is started, otherwise the same download manner as ordinary download mechanism will be used. Other parameters are also very important. The download management unit uses these parameters to decide the flow of the following steps.
2) A download task storing module: the download task storing module stores various necessary data of the download task, which mainly comprises such basic download information as the link address of the download task and the name of the download task, and the download time which is very important to the present invention. A timer obtains the suspension time of this task according to the current time and the download time of each task so as to decide whether it is expired.
3) A download function module: the download function module is necessary for the download function whether the present invention is used, because it is responsible for linking to the network and downloading data from the network. As to this module, whether to adopt the solution of present invention mainly means the difference of access points. Once the WIFI intelligent download function is started, all that the download function module uses is the WIFI network.
4) A timer module: the timer module detects the condition of each download task regularly, and obtains the suspension time of the download task mainly by the start time of the download task and the current time. Then, the timer module judges whether this download task is expired. If it is expired, then the download task management module will decide the next operation according to the parameter set previously

As shown in Fig. 3, the WIFI searching unit can also comprises three parts.
1) a parameter module: the parameter stored in the parameter module is the time interval of the search.
2) a searching module, configured to use an interface of a WIFI device to search for a WIFI access point.
3) a timer module, configured to start the searching module to search for an access point according to the timing.

Fig. 4 is a downloading module parameter setting interface. It can be seen that there are mainly three download parameters. The first parameter is whether a WIFI network is needed for the download. The second parameter is the waiting time of the download task The user can designate the suspension time of the download task. The third main parameter is the way of processing when the suspension is expired. The way of processing can be: using the mobile communication network to download, deleting this task, and alerting the user to re-select.

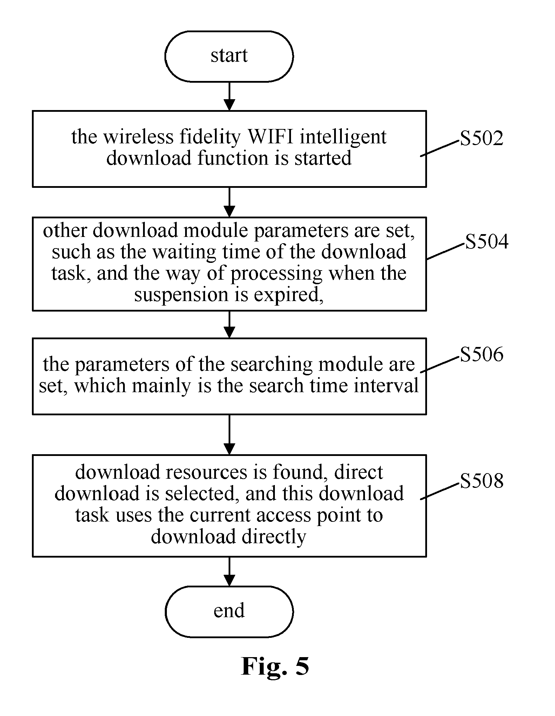

The parameter setting procedure of the present invention and the ordinary download procedure will be described in detail hereinafter in conjunction with Fig. 5. The specific implementing steps are as follows.
Step S502: the WIFI intelligent download function is started. First, the user needs to set the parameters manually, especially the first parameter. If the first parameter is not started, the operation procedure of the present invention is the same as the ordinary download procedure. Once the user clicks the link, the download will be performed using the current link.
Step S504: only after the WIFI download function is started, other parameters can be set. The second parameter is the waiting time of the download task. The user can set the waiting time according to his own requirements. And then, the third main parameter is the way of processing when the suspension is expired. Once the waiting time is expired and no WIFI network is found, then it needs to decide what to do next.
Step S506: After the parameters of the download manager module are set, it further needs to set the parameters of the searching module, which mainly is the search time interval. Too short interval would cause too much electricity consumption of the mobile phone. When all the parameters are set, the user can experience the method for downloading files according to the embodiments of the present invention.
Step S508: When browsing a page, the user finds resources that he likes and clicks the resources to download. At this moment the user can select direct download. If the direct download is selected, this download task will use the current link point to download. Thus there is no difference between this download procedure and the ordinary download procedure. The user is prompted that the download procedure is finished when the download is over.

The above procedure mainly downloads relatively small files timely according to user requirements, or uses the way of direct download when the user is in a WIFI access point.

In specific implementation, first the user must have a mobile phone which supports the WIFI function and the present invention. When a user gets a mobile phone, he needs to set the parameters in the download manager. For the convenience of the user, this function is closed in default condition. After having selected to start the WIFI download, the user successively sets the other two important parameters: one is the suspension time of the download task and the other is the way of processing when the suspension time is expired. After all is done, the user can experience the convenience and rapidness of the present invention during the following Internet surfing time. When a user sits in a car and uses the mobile phone to log onto his favorite websites, view the news, read novels, etc. via the mobile communication network, at this moment the user finds a MP3 that he likes and wants to download it into his own mobile phone. After the user has clicked the download link, there appears a download prompt. The user considers that this download file is very small and it is unnecessary to use the WIFI to download. Then he can directly click *confirm* and uses the current mobile communication network to download this MP3.

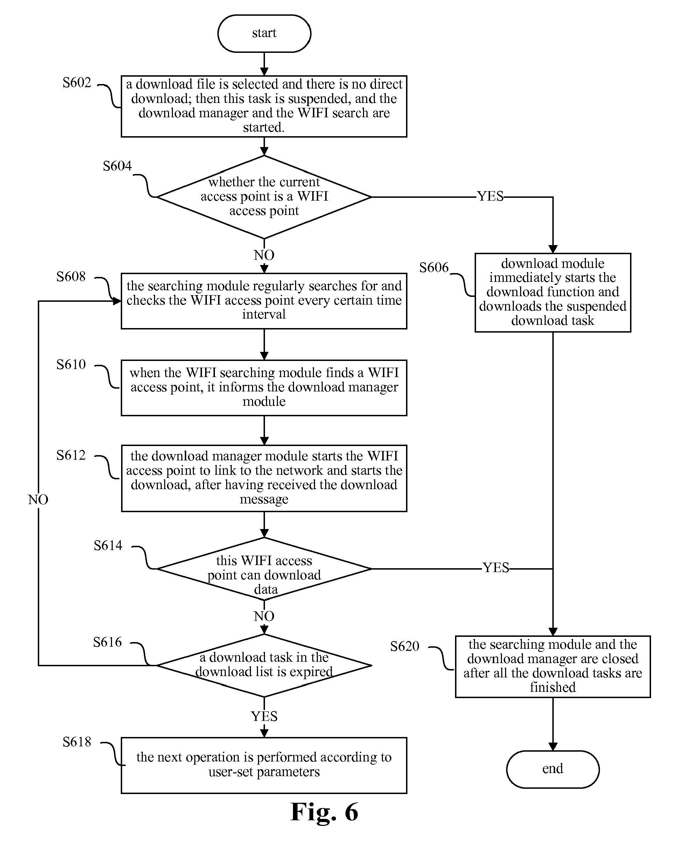

After the parameter setting is done, the intelligent download procedure for large files of the present invention is described according to Fig. 6. The specific steps are as follows.
Step S602: A user selects a file to download, but does not select direct download. Then, this task will be suspended, and the download manager module is started. Then, a message is sent to inform the WIFI searching module to perform searching.
Step S604: The searching module is started and immediately judges whether the current access point is a WIFI access point. If yes, step S606 is executed, otherwise step S608 is executed.
Step S606: If what the current user uses is a WIFI access point, then the searching module immediately informs the download manager module. The download manager module starts the download function to download the suspended download task after having received the message.
Step S608: If the current access point is not a WIFI access point but a mobile communication network, the searching module does not send a message to the download manager module but starts a timer, and regularly searches for a WIFI access point and detects the current used network every certain time interval.
Step S610: After having found a WIFI access point, the WIFI searching module detects that currently no network is started, and then sends a download message to the download manager module.
Step S612: The download manager module starts the WIFI access point to link to the network and then starts the download, after having received the download message.
Step S614: If the download manager module finds that the download task does not download any data after a period of time, step S616 is executed and it is judged whether any download task in the download list is expired. If data can be downloaded, this file is downloaded for operation, and step S620 is executed.
Step S616: If the suspension time of a download task has arrived, step S618 is executed. Otherwise, the procedure goes back to step S608 and the searching module is informed to search other available WIFI access points.
Step S618: When the limited time set in the parameters of the download manager module expires, and there is still no link to any available WIFI access points, then the next operation is performed according to the user-set parameters. If the user sets to use the mobile communication network, the download manager module will link to the mobile network and then start a task. If the user sets to delete the download task, the download manager module will delete the expired download tasks automatically and continue to suspend other download tasks. If the user sets to inform the user, then a download management interface will be popped out to inform the user to select the next operation by himself. The user can select to delete this download task or continue to wait. If he selects to continue to wait, this task will be stored in a task queue and the starting time of this task will be set to be the current time.
Step S620: When the download of all the tasks of the download manager module is finished, the download management module informs the searching module to close the timer and then close this function. Then the download manager will also close itself.

The above procedures are directed to the download of relatively large files. In specific implementation, when a user uses a mobile phone to access the network and finds a movie video that he likes, which video file is very big. If it is downloaded via the mobile communication network, the fee is estimated to be very high. However, the user does not need to worry about this problem. He clicks the download link, and does not select direct download but continues to browse the other contents on the website. Then, the user comes to his office building and starts his daily work. This office building is just under the coverage of a free WIFI network When the user is busy with his work, the WIFI search function of the mobile phone has already found this WIFI network and sends a message to the download manager module after having successfully linked to this network. The download management starts the download task. With the support of high speed WIFI network, the video file of hundreds of megabytes will be downloaded in a few minutes. When the user finishes his work in the morning and picks up his mobile phone to find that the movie that he likes has already been downloaded, he can enjoy it on the mobile phone or copies this video into his computer and stores it.

The entire process does not need the user to perform any operations. The user can just experience the high speed, intelligent and convenient experience brought by the high-tech mobile phone and wireless network.

Apparently, those skilled in the art should understand that each module or step in the present invention can be implemented through general-purpose computing devices, and they can be put together on single computing devices or distributed on a network consisted of a plurality of computing devices. Optionally, they can be implemented using computing device executable program code. Therefore, they can be executed by computing devices by storing them in a storage device, and in some cases, the shown or described steps can be executed in an order different from this, or they can be made into each integrated circuit module respectively or they can be implemented by making a plurality of modules or steps in them into single integrated modules respectively. Thus, the present invention is not limited to the combination of any specific hardware and software.

The above is only to illustrate the preferred embodiments but not to limit the present invention. Various alterations and changes to the present invention are apparent to those skilled in the art. The scope defined in the present invention shall comprise any modification, equivalent substitution and improvement within the spirit and principle of the present invention.

## Claims

1. A method for downloading files based on Wireless Fidelity (WIFI), **characterized by** comprising:
setting a download task;
searching for an access point for accessing a network;
judging whether the found access point is a WIFI access point; and
if the found access point is the WIFI access point, downloading a file indicated by the download task.

2. The method according to claim 1, **characterized in that** setting the download task comprises:
selecting the file to be downloaded; and
storing the download task corresponding to the selected file.

3. The method according to claim 2, **characterized in that** setting the download task further comprises:
setting a parameter for the download task, wherein the parameter comprises at least one of: a download address of the file, a storage time of the download task, and a way of processing the download task when the storage time is expired.

4. The method according to claim 1, **characterized in that** searching the access point for accessing the network comprises:
if currently the WIFI access point is not connected and there exists an unfinished download task, performing a step of searching for an access point for accessing the network every preset time interval.

5. The method according to claim 1, **characterized in that** downloading the file indicated by the download task comprises:
when a preset download time arrives, downloading the file indicated by the download task.

6. The method according to claim 1, **characterized in that** after judging whether the found access point is the WIFI access point, the method further comprises:
if the found access point is not the WIFI access point and a storage time of the download task is expired, using a mobile communication network to download the file indicated by the download task, or deleting the download task.

7. An apparatus for downloading files based on Wireless Fidelity (WIFI), **characterized by** comprising:
a searching unit, configured to search for an access point for accessing a network; and
a download management unit, configured to set a download task before searching for the access point for accessing the network, judge whether the found access point is a WIFI access point, and download a file indicated by the download task when the found access point is the WIFI access point.

8. The apparatus according to claim 7, **characterized in that** the download management unit comprises:
a download task storing module, configured to store the download task corresponding to the selected file; and
a download task executing module, configured to download the file indicated by the download task when the found access point is the WIFI access point.

9. The apparatus according to claim 8, **characterized in that** the download management unit further comprises:
a setting module, configured to set a parameter for the download task, wherein the parameter comprises at least one of: a download address of the file, a storage time of the download task, and a way of processing the download task when the storage time is expired.

10. The apparatus according to claim 7, **characterized in that** the download management unit is further configured to use a mobile communication network to download the file indicated by the download task or delete the download task, when the found access point is not the WIFI access point and a storage time of the download file is expired.
